# EUROPEAN PATENT SPECIFICATION

(11) **EP 3 738 726 B1**
(45) Date of publication and mention of the grant of the patent: **23.08.2023**
(21) Application number: 18899220.0
(22) Date of filing: 05.10.2018
(51) Int. Cl.: B25J 13/00, A63H 11/00, B25J 11/00, G05D 1/02

(54) **ANIMAL-SHAPED AUTONOMOUS MOVING BODY, METHOD OF OPERATING ANIMAL-SHAPED AUTONOMOUS MOVING BODY, AND PROGRAM**
TIERFÖRMIGER AUTONOMER BEWEGLICHER KÖRPER, VERFAHREN ZUM BETRIEB EINES TIERFÖRMIGEN AUTONOMEN BEWEGLICHEN KÖRPERS UND PROGRAMM
CORPS MOBILE AUTONOME EN FORME D'ANIMAL, PROCÉDÉ DE FONCTIONNEMENT DE CORPS MOBILE AUTONOME EN FORME D'ANIMAL ET PROGRAMME

(30) Priority: 10.01.2018 JP 2018001796
(43) Date of publication of application: 18.11.2020
(73) Proprietor: Sony Group Corporation, Tokyo 108-0075 (JP)
(72) Inventor: KATAYAMA, Takeshi, Tokyo 108-0075 (JP); MIZUKAMI, Tomoo, Tokyo 108-0075 (JP); MORITA, Takuma, Tokyo 108-0075 (JP); MORINAGA, Eiichiro, Tokyo 108-0075 (JP); YABE, Yuhei, Tokyo 108-0075 (JP); TOU, Yuichiro, Tokyo 108-0075 (JP)
(74) Representative: Müller Hoffmann & Partner
(86) International application number: PCT/JP2018/037362
(87) International publication number: WO 2019/138618

(56) References cited:
- WO-A1-00/68880
- WO-A1-2012/172721
- JP-A- 2001 191 282
- JP-A- 2001 191 282
- JP-A- 2002 116 792
- JP-A- 2002 120 177

## Description

### Technical Field

The present disclosure relates to an animal-shaped autonomous mobile object, a method of causing the animal-shaped autonomous mobile object to perform a motion, and a program.

### Background Art

In recent years, an autonomous mobile object, which is a robot that performs an autonomous motion, has been developed. For example, PTL 1 discloses an autonomous mobile object that performs a motion corresponding to a charge level of a rechargeable battery when connected to a charger base.

### Citation List

### Patent Literature

PTL 1: International Publication WO 2000/38295
JP2001-191282 A is related to a robot device and its controlling method. In the robot device acting on the basis of first control data and its controlling method, after its ambience and/or its own state is recognized, the first control data is changed to second control data for acting in imitation of a creature corresponding to a specific recognition result when the specific recognition result is obtained among the recognition results.
JP2002-116792 describes a robot controller and method for robot control and recording medium. Herein, a user's voice inputted to a microphone is recognized by a voice recognition part and an action determining mechanism part determines a next action of a robot according to the voice recognition result; if the voice recognition ends in failure or its reliability is low, and consequently a user's instruction, etc., can not be understood and the action of the robot can not be determined, the user is informed that the voice recognition reliability is low, or the voice recognition ends in failure by making the robot take a specific action of, for example, tilting the head or putting the hands on the ears.

### Summary of the Invention

### Problems to be Solved by the Invention

According to the technique disclosed in PTL 1, it is possible for a user to know the charge level of the rechargeable battery from the motion of the autonomous mobile object. However, according to the technique disclosed in PTL 1, in a case where the autonomous mobile object executes some kind of calculation process internally, it has been difficult to indicate to the user that the autonomous mobile object is executing a calculation process and what kind of calculation process is being executed without using text display or the like.

Accordingly, it is an object of the present invention to provide an animal-shaped autonomous mobile object, a method of causing the animal-shaped autonomous mobile object to perform a motion, and a program, which are able to indicate to the user a type of the calculation process being executed internally without using text display. This object is solved by the teachings of the independent claims. Further embodiments are defined in the dependent claims. The invention is defined by the appended claims. References to embodiments which do not fall under the scope of the claims are to be understood as examples useful for understanding the invention.

There is provided an animal-shaped autonomous mobile object including a housing having a shape of an animal, a calculation section, and a motion controller that causes the housing to perform a motion corresponding to a type of a calculation process that the calculation section is executing.

Further, there is provided a method of causing an animal-shaped autonomous mobile object to perform a motion, the method including executing, by a processor, a calculation process, and causing a housing having a shape of an animal to perform a motion corresponding to a type of the calculation process that the processor is executing.

Further, there is provided a program for causing a computer to function as a calculation section, and a motion controller that causes a housing having a shape of an animal to perform a motion corresponding to a type of a calculation process that the calculation section is executing.

### Effects of the Invention

As described above, according to the present disclosure, it is possible to indicate, by a motion, to the user the type of the calculation process being executed internally.

### Brief Description of Drawings

[FIG. 1] FIG. 1 is a diagram illustrating a hardware configuration of an autonomous mobile object according to an embodiment of the present disclosure.
[FIG. 2] FIG. 2 is a configuration example of an actuator included in the autonomous mobile object according to an embodiment of the present disclosure.
[FIG. 3] FIG. 3 is a diagram for explaining a motion of the actuator included in the autonomous mobile object according to an embodiment of the present disclosure.
[FIG. 4] FIG. 4 is a diagram for explaining the motion of the actuator included in the autonomous mobile object according to an embodiment of the present disclosure.
[FIG. 5] FIG. 5 is a diagram for explaining a function of a display included in the autonomous mobile object according to an embodiment of the present disclosure.
[FIG. 6] FIG. 6 is a diagram illustrating motion examples of the autonomous mobile object according to an embodiment of the present disclosure.
[FIG. 7] FIG. 7 is a diagram illustrating an example of a system configuration according to an embodiment of the present disclosure.
[FIG. 8] FIG. 8 is a diagram illustrating a functional configuration example of the autonomous mobile object according to an embodiment of the present disclosure.
[FIG. 9] FIG. 9 is a diagram illustrating a functional configuration example of an information processing server according to an embodiment of the present disclosure.
[FIG. 10] FIG. 10 is an explanatory diagram illustrating a position of a camera.
[FIG. 11] FIG. 11 is an explanatory diagram illustrating a specific example of a SLAM mode.
[FIG. 12] FIG. 12 is an explanatory diagram illustrating a marking motion of the autonomous mobile object.
[FIG. 13] FIG. 13 is a flowchart illustrating a flow of a first motion example.
[FIG. 14] FIG. 14 is an explanatory diagram illustrating a process result of a SLAM process and a specific example of a marking flag.
[FIG. 15] FIG. 15 is an explanatory diagram illustrating a motion of sniffing.
[FIG. 16] FIG. 16 is an explanatory diagram illustrating a motion during a voice recognition process.

### Modes for Carrying Out the Invention

The following describes a preferred embodiment of the present disclosure in detail with reference to the accompanying drawings. It is to be noted that, in this description and the accompanying drawings, components that have substantially the same functional configuration are indicated by the same reference signs, and thus redundant description thereof is omitted.

Further, in this description and the drawings, components that have substantially the same functional configuration are sometimes distinguished from each other using different alphabets after the same reference sign. However, in a case where there is no need in particular to distinguish components that have substantially the same functional configuration, the same reference sign alone is attached to each of the components.

It is to be noted that description is given in the following order.

### 1. Configurations

### 1.1. Outline of Autonomous Mobile Object 10

### 1.2. Hardware Configuration of Autonomous Mobile Object 10

### 1.3. System Configuration Example

### 1.4. Functional Configuration Example of Autonomous Mobile Object 10

### 1.5. Functional Configuration Example of Information Processing Server 20

### 2. Motions

### 2.1. First Motion Example

### 2.2. Second Motion Example

### 3. Conclusion

### [1. Configuration]

### [1.1. Outline of Autonomous Mobile Object 10]

First, an outline of an autonomous mobile object 10 according to an embodiment of the present disclosure will be described. The autonomous mobile object 10 according to an embodiment of the present disclosure is an information processing device that executes situation estimation based on collected sensor information and autonomously selects and executes various motions according to the situation. One of the features of the autonomous mobile object 10 is to autonomously execute a motion that is presumed to be optimal for each situation, unlike robots that simply perform a motion in accordance with user's instruction commands.

Therefore, in some situations, the autonomous mobile object 10 according to an embodiment of the present disclosure may not intentionally execute a motion corresponding to a user's instruction, or may execute another behavior different from the motion. The above situation corresponds to, for example, in a case where a motion corresponding to a user's instruction is performed, a case in which safety of the user, the autonomous mobile object 10, or a surrounding environment is impaired, or a case in which the autonomous mobile object 10 prioritizes another desire (instinct) such as, for example, a charging process.

Further, there is also a case where the autonomous mobile object 10 attempts to motivate a user's interest or attempts to communicate his/her emotion and a hardware state to the user by intentionally avoiding to following a user's instruction.

In contrast, the autonomous mobile object 10 has a strong desire (instinct) to be loved by the user. Therefore, the autonomous mobile object 10 repeatedly executes a motion corresponding to a user's instruction in order to please the user, or learns a motion that the user likes and voluntarily executes the motion even if there is no instruction.

As described above, the autonomous mobile object 10 according to an embodiment of the present disclosure decides and executes an autonomous motion by comprehensively judging desires, emotions, surrounding environments, and the like as in the case of animals including humans. In this point, the autonomous mobile object 10 clearly differs from a passive device that executes motions or processes based on instructions.

The autonomous mobile object 10 according to an embodiment of the present disclosure may be an autonomous mobile robot that autonomously moves inside a space and executes various motions. The autonomous mobile object 10 may be, for example, an autonomous mobile robot having a shape simulating that of an animal such as a human or a dog, and having capability to perform motions. Further, the autonomous mobile object 10 may be, for example, a vehicle or another device that is able to communicate with a user. Levels of shapes, capabilities, desires, and the like of the autonomous mobile object 10 according to an embodiment of the present disclosure may be appropriately designed according to purposes and roles.

### [1.2. Hardware Configuration of Autonomous Mobile Object 10]

Next, a hardware configuration of the autonomous mobile object 10 according to an embodiment of the present disclosure will be described. In the following, a case will be described where the autonomous mobile object 10 is a four-legged walking robot of a dog shape.

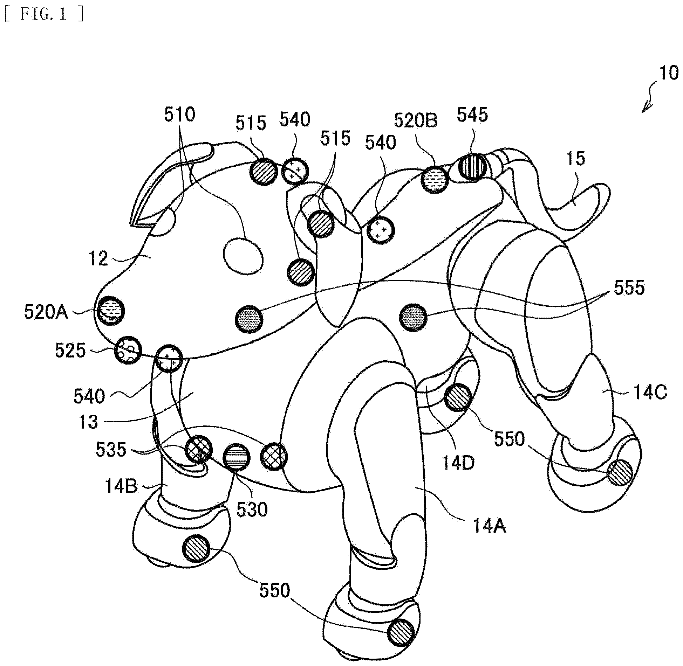

FIG. 1 is a diagram illustrating the hardware configuration of the autonomous mobile object 10 according to an embodiment of the present disclosure. As illustrated in FIG. 1, the autonomous mobile object 10 has a housing having a shape of an animal shape (a dog shape in the example illustrated in FIG. 1), and the housing includes a head part 12, a body part 13, four leg parts 14 (two foreleg parts 14A and 14B, two hind leg parts 14C and 14D), and a tail part 15. The autonomous mobile object 10 includes two displays 510 on the head part 12.

Further, the autonomous mobile object 10 includes various sensors. The autonomous mobile object 10 includes, for example, a microphone 515, a camera 520, a ToF (Time of Flight) sensor 525, a human detection sensor 530, a PSD (Position Sensitive Detector) 535 sensor, a touch sensor 540, a light intensity sensor 545, a sole button 550, and an inertial sensor 555.

### [Microphone 515]

The microphone 515 has a function of collecting a surrounding sound. The sound includes, for example, a user's utterance or a surrounding environmental sound. The autonomous mobile object 10 may, for example, include four microphones on the head part 12. Provision of a plurality of microphones 515 makes it possible to collect a sound generated in the surroundings with high sensitivity, and to achieve localization of the sound source.

### [Camera 520]

The camera 520 is an imaging section for capturing an image of a user and a surrounding environment. The autonomous mobile object 10 has, for example, a camera 520A located at a tip of the nose and a camera 520B located at the waist. The cameras 520A and 520B may be a wide-angle camera or a fish-eye camera. The camera 520A disposed at the tip of the nose captures an image corresponding to a visual field of the front of the autonomous mobile object 10 (i.e., the visual field of the dog), and the camera 520B at the waist part captures an image of the surrounding area centered on the upper side. The autonomous mobile object 10 is able to achieve SLAM (Simultaneous Localization and Mapping) by extracting feature points of a ceiling or the like on the basis of an image captured by the camera 520B disposed at the waist part, for example.

### [ToF sensor 525]

The ToF sensor 525 has a function of detecting a distance from an object that is present in front of the head part 12. The ToF sensor 525 is provided at the tip of the nose of the head part 12. The ToF sensor 525 is able to detect distances from various objects with high accuracy, and to cause a motion to be achieved corresponding to a relative position with respect to an object including a user, an obstacle, or the like.

### [Human Detection Sensor 530]

The human detection sensor 530 has a function of detecting the location of a user or a pet raised by the user. The human detection sensor 530 is disposed, for example, at the chest. The human detection sensor 530 is able to, by detecting an animal that is present in front, cause the relevant animal to achieve various motions, e.g., motions corresponding to emotions such as interest, fear, surprise, and the like

### [PSD 535]

The PSD sensor 535 has a function of acquiring a situation of a floor surface in front of the autonomous mobile object 10. The PSD sensor 535 is disposed, for example, at the chest. The PSD sensor 535 is able to detect a distance from an object that is present on the floor surface in front of the autonomous mobile object 10 with high accuracy, and to cause a motion to be achieved corresponding to a relative position with respect to the relevant object.

### [Touch Sensor 540]

The touch sensor 540 has a function of detecting a contact with a user. The touch sensor 540 is disposed at a region where the user is likely to touch the autonomous mobile object 10, e.g., top of the head, under the jaw, the back, etc. The touch sensor 540 may be, for example, a capacitive or pressure-sensitive touch sensor. The touch sensor 540 is able to detect a contact action such as touching, stroking, tapping, or pushing by the user, and to cause a motion to be achieved corresponding to the relevant contact action.

### [Light Intensity Sensor 545]

The light intensity sensor 545 detects a light intensity of a space in which the autonomous mobile object 10 is located. The light intensity sensor 545 may, for example, be disposed on the back of the body part 13 and at the base of the tail part 15. The light intensity sensor 545 is able to detect the surrounding brightness and to cause a motion to be achieved corresponding to the relevant brightness.

### [Sole Button 550]

The sole button 550 has a function of detecting whether or not a bottom surface of the leg part 14 of the autonomous mobile object 10 is in contact with the floor. For this purpose, the sole button 550 is disposed at each of regions corresponding to respective paw pads of the four leg parts 14. The sole button 550 is able to detect the contact or non-contact of the autonomous mobile object 10 with the floor surface, and to grasp, for example, a fact that the autonomous mobile object 10 has been lifted by the user.

### [Inertial Sensor 555]

The inertial sensor 555 is a 6-axis sensor that detects physical quantities such as speeds, accelerations, and rotations of the head part 12 and the body part 13. That is, the inertial sensor 555 detects the accelerations and angular velocities of an X-axis, a Y-axis, and a Z-axis. The head part 12 and the body part 13 are provided with the respective inertial sensors 555. The inertial sensor 555 is able to detect physical movement of the head part 12 and the body part 13 of the autonomous mobile object 10 with high accuracy, and to cause a motion control to be achieved corresponding to a situation.

Some examples of the sensors included in the autonomous mobile object 10 according to the embodiment of the present disclosure has been described above. It is to be noted that the configuration described above with reference to FIG. 1 is merely an example, and the configuration of the sensors that the autonomous mobile object 10 may include are not limited thereto. The autonomous mobile object 10 may further include various communication devices including, for example, a temperature sensor, a geomagnetic sensor, a GNSS (Global Navigation Satellite System) signal receiver, and the like, in addition to the configuration described above. The configuration of the sensors included in the autonomous mobile object 10 may be flexibly modified according to specifications and operations.

### [Joint part]

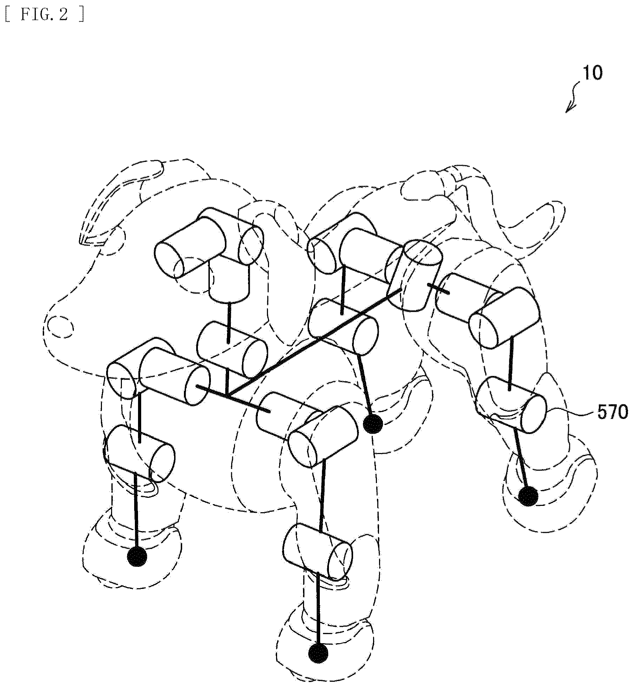

Next, a configuration example of a joint part of the autonomous mobile object 10 according to an embodiment of the present disclosure will be described. FIG. 2 is a configuration example of an actuator 570 included in the autonomous mobile object 10 according to an embodiment of the present disclosure. The autonomous mobile object 10 according to an embodiment of the present disclosure has a total of 22 rotational degrees of freedom, including, in addition to the rotation points illustrated in FIG. 2, two for the ears, two for the tail part 15, and one for the mouth.

For example, the autonomous mobile object 10 has three degrees of freedom in the head part 12, which makes it possible to achieve both nodding and tilting of the neck. In addition, the autonomous mobile object 10 reproduces a swinging motion of the waist by the actuator 570 provided in the waist part, thereby achieving a natural and flexible motion further closer to that of a real dog.

It is to be noted that the autonomous mobile object 10 according to an embodiment of the present disclosure may achieve the above-mentioned 22 rotational degrees of freedom by combining a uniaxial actuator and a biaxial actuator, for example. For example, the elbows and knees of the leg parts 14 may each employ the uniaxial actuator, and the shoulder and the base of the thigh may each employ the biaxial actuator.

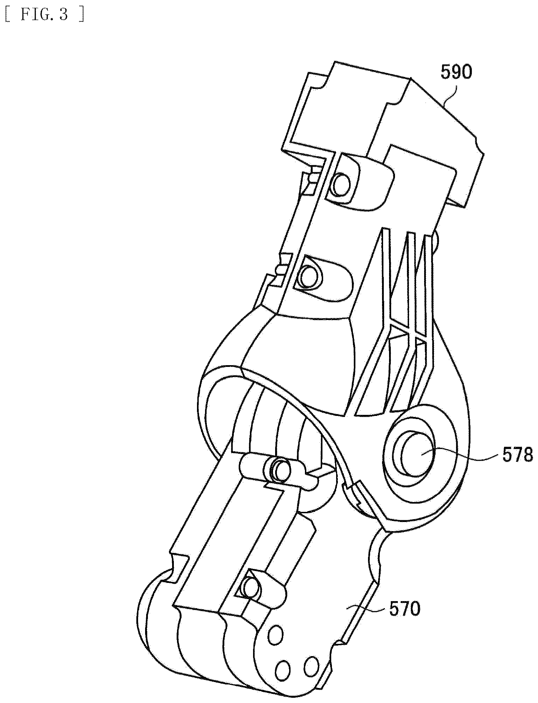

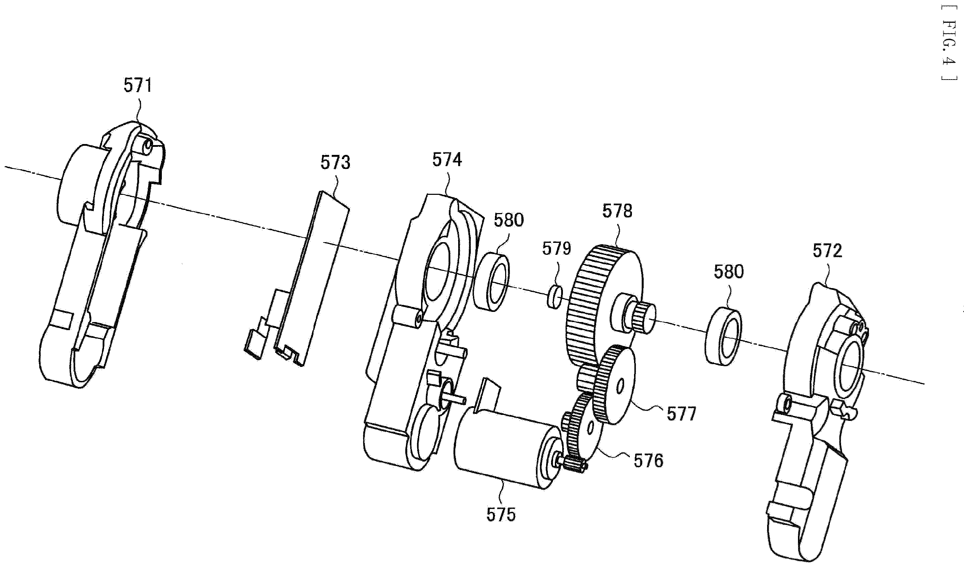

FIGs. 3 and 4 are each a diagram for explaining a motion of the actuator 570 included in the autonomous mobile object 10 according to an embodiment of the present disclosure. Referring to FIG. 3, the actuator 570 is able to drive a movable arm 590 at any rotational position and rotation speed by rotating an output gear by a motor 575.

Referring to FIG. 4, the actuator 570 according to an embodiment of the present disclosure includes a rear cover 571, a gear box cover 572, a control board 573, a gear box base 574, the motor 575, a first gear 576, a second gear 577, an output gear 578, a detection magnet 579, and two bearings 580.

The actuator 570 according to an embodiment of the present disclosure may be, for example, a magnetic svGMR (spin-valve Giant Magnetoresistive). The control board 573 rotates the motor 575 on the basis of control of a main processor, whereby power is transmitted to the output gear 578 via the first gear 576 and the second gear 577, and is able to drive the movable arm 590.

Further, a position sensor provided in the control board 573 detects a rotation angle of the detection magnet 579 rotating in synchronization with the output gear 578, thereby being able to detect a rotation angle, i.e., a rotational position, of the movable arm 590 with high accuracy.

Incidentally, the magnetic svGMR has advantages in that the magnetic svGMR is excellent in durability owing to its non-contact type, and an influence of signal variation due to distance variation of the detection magnet 579 and the position sensor is small by being used in a GMR saturated area.

The configuration example of the actuator 570 included in the autonomous mobile object 10 according to an embodiment of the present disclosure has been described above. According to the above configuration, it becomes possible to control bending and stretching motions of the joint part included in the autonomous mobile object 10 with high accuracy, and to detect accurately the rotational position of the joint part.

### [Display 510]

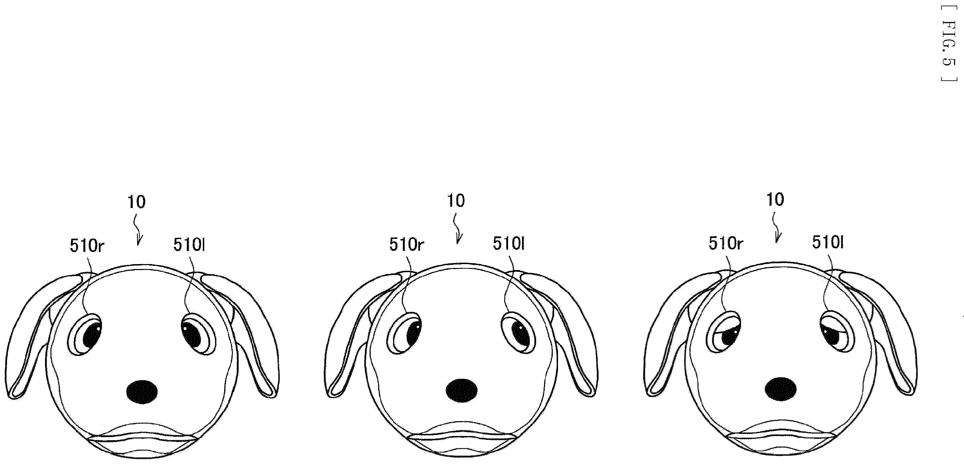

Next, referring to FIG. 5, a function of the display 510 included in the autonomous mobile object 10 according to an embodiment of the present disclosure will be described. FIG. 5 is a diagram for explaining a function of the display 510 included in the autonomous mobile object 10 according to an embodiment of the present disclosure.

The display 510 has a function of visually expressing movement of the eyes and an emotion of the autonomous mobile object 10. As illustrated in FIG. 5, the display 510 is able to express motions of the eyeballs, the pupils, and the eyelids corresponding to emotions and motions. The display 510 does not intentionally display characters, symbols, images that are not related to eyeball movements, or the like, thereby producing a natural motion close to that of an existing animal such as a dog.

As illustrated in FIG. 5, the autonomous mobile object 10 includes two displays 510r and 5101 corresponding to the right eye and the left eye, respectively. The displays 510r and 5101 are achieved, for example, by two independent OLEDs (Organic Light Emitting Diodes). The OLEDs make it possible to reproduce curved surfaces of the eyeballs, and to achieve a more natural exterior as compared with a case where a pair of eyeballs is expressed by one planar display or a case where two eyeballs are expressed by two independent planar displays.

As described above, the displays 510r and 5101 makes it possible to express, with high accuracy and flexibility, a line of sight and emotions of the autonomous mobile object 10 as illustrated in FIG. 5. Further, it becomes possible for the user to intuitively grasp a state of the autonomous mobile object 10 from the motions of the eyeballs displayed on the display 510.

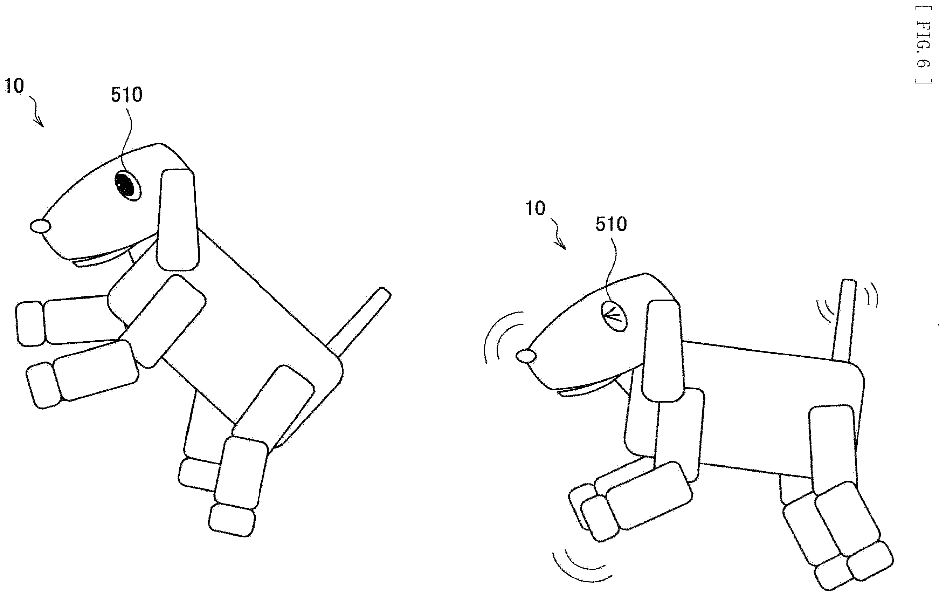

The hardware configuration of the autonomous mobile object 10 according to an embodiment of the present disclosure has been described above. According to the above configuration, as illustrated in FIG. 6, the motions of the joint part and the eyeballs of the autonomous mobile object 10 are controlled with high accuracy and flexibility, which makes it possible to achieve a motion and an emotional expression closer to those of an existing living thing. It is to be noted that FIG. 6 illustrates motion examples of the autonomous mobile object 10 according to an embodiment of the present disclosure; however, FIG. 6 illustrates a simplified external structure of the autonomous mobile object 10 in order to give the description focusing on the motions of the joint parts and the eyeballs of the autonomous mobile object 10. Similarly, although external structures of the autonomous mobile object 10 may be illustrated in simplified forms in the following descriptions, the hardware configuration and the exterior of the autonomous mobile object 10 according to an embodiment of the present disclosure are not limited to the examples illustrated in the drawings, and may be appropriately designed.

### [1.3. System Configuration Example]

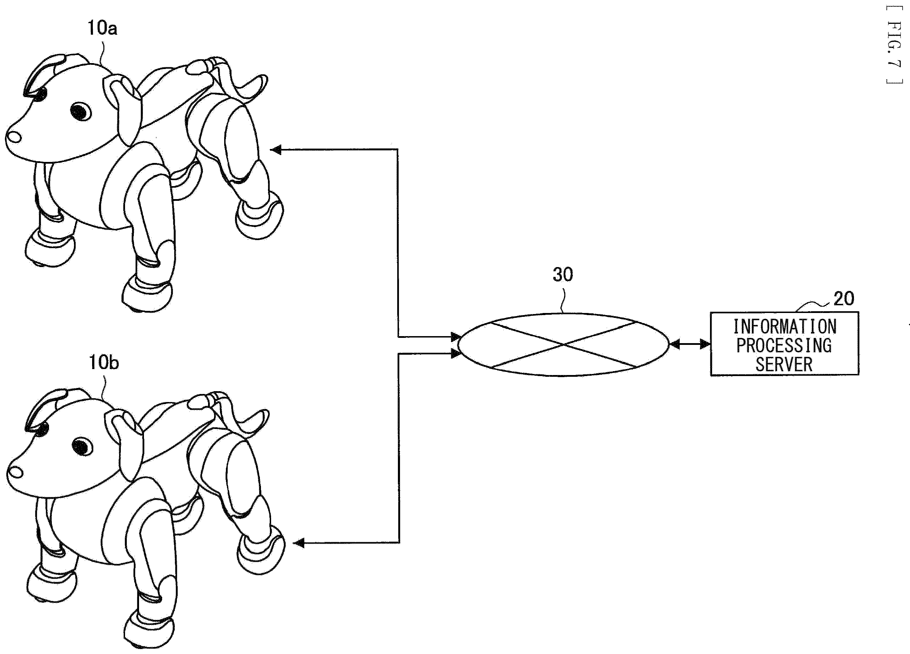

Next, a system configuration example according to an embodiment of the present disclosure will be described. FIG. 7 is a diagram illustrating an example of a system configuration according to an embodiment of the present disclosure. Referring to FIG. 7, an information processing system according to an embodiment of the present disclosure includes a plurality of autonomous mobile objects 10 and the information processing server 20. It is to be noted that the autonomous mobile objects 10 and the information processing server 20 are coupled to each other, and the autonomous mobile objects 10 are coupled to each other, to be able to communicate with each other via a network 30.

### [Autonomous Mobile Object 10]

The autonomous mobile object 10 according to an embodiment of the present disclosure is an information processing device that executes situation estimation based on collected sensor information and autonomously selects and executes various motions according to the situation. As described above, the autonomous mobile object 10 according to an embodiment of the present disclosure may be, for example, an autonomous mobile robot having a shape simulating that of an animal such as a human or a dog, and having capability to perform motions.

### [Information Processing Server 20]

The information processing server 20 according to an embodiment of the present disclosure is an information processing device that is coupled to the plurality of autonomous mobile objects 10 and has a function of collecting various types of information from the autonomous mobile objects 10. The information processing server 20 is able to perform, on the basis of sensor information collected by the autonomous mobile object 10, for example, an analysis related to a state of hardware of the autonomous mobile object 10, a user's degree of addiction to the autonomous mobile object 10, or the like.

Further, the information processing server 20 has a function of presenting, on the basis of a situation estimated by the autonomous mobile object 10, a recommended action to be performed by the autonomous mobile object 10 in the situation. In this case, the information processing server 20 may transmit control sequence data for causing the autonomous mobile object 10 to achieve the recommended action to the autonomous mobile object 10. The functions of the information processing server 20 will be described in detail separately.

### [Network 30]

The network 30 has a function of coupling the autonomous mobile object 10 and the information processing server 20 to each other, and the autonomous mobile objects 10 to each other. The network 30 may include a public line network such as the Internet, a telephone network, or a satellite network, various types of LAN including Ethernet (registered trademark), WAN (Wide Area Network), and the like. Further, the network 30 may also include a leased line network such as IP-VPN (Internet Protocol-Virtual Private Network). Moreover, the network 30 may include a radio communication network such as Wi-Fi (registered trademark) or Bluetooth (registered trademark).

The system configuration example according to an embodiment of the present disclosure has been described above. It is to be noted that the configuration described above with reference to FIG. 7 is merely an example, and the configuration of the information processing system according to an embodiment of the present disclosure is not limited thereto. For example, the autonomous mobile object 10 may further communicate with various external devices in addition to the information processing server 20. The external device may include, for example, a server that transmits weather, news, and other service information, various information processing terminals owned by a user, home appliances, and the like. The system configuration according to an embodiment of the present disclosure may be flexibly modified according to specifications and operations.

### [1.4. Functional Configuration Example of Autonomous Mobile Object 10]

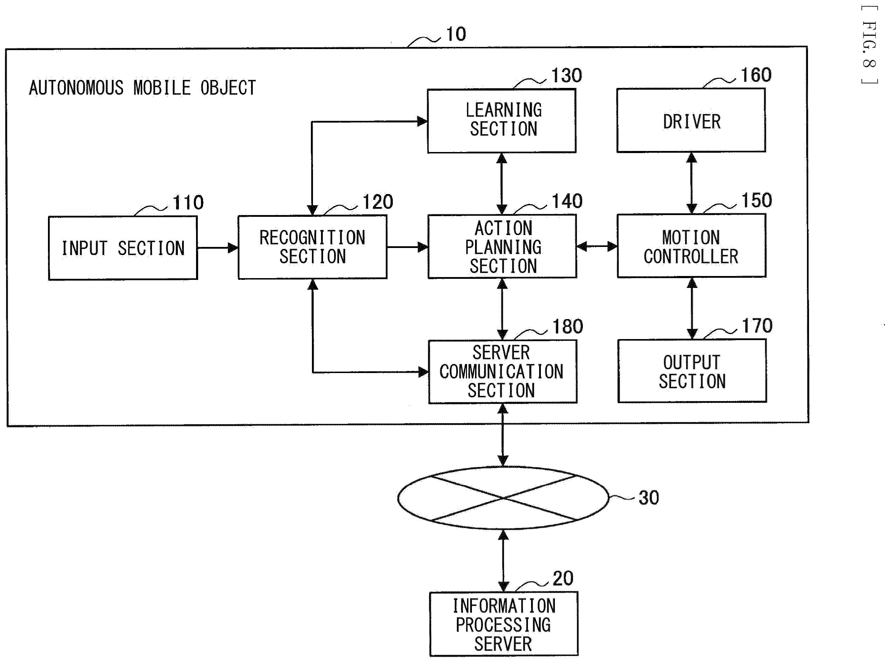

Next, a functional configuration example of the autonomous mobile object 10 according to an embodiment of the present disclosure will be described. FIG. 8 is a diagram illustrating the functional configuration example of the autonomous mobile object 10 according to an embodiment of the present disclosure. Referring to FIG. 8, the autonomous mobile object 10 according to an embodiment of the present disclosure includes an input section 110, a recognition section 120, a learning section 130, an action planning section 140, a motion controller 150, a driver 160, an output section 170, and a server communication section 180.

### [Input Section 110]

The input section 110 has a function of collecting various types of information related to a user and a surrounding environment. The input section 110 is a functional block including various sensors described referring to FIG. 1, and collects, for example, a user's utterance, a surrounding environmental sound, image information related to the user and the surrounding environment, and various types of sensor information.

### [Recognition Section 120]

The recognition section 120 has a function of performing various types of recognitions related to the user, the surrounding environment, and a state of the autonomous mobile object 10, on the basis of the various types of information collected by the input section 110. For example, the recognition section 120 may perform human identification, recognition of a facial expression and a line of sight, object recognition, color recognition, shape recognition, marker recognition, obstacle recognition, step recognition, brightness recognition, and the like.

Further, the recognition section 120 performs emotion recognition, word understanding, sound source localization, and the like related to the voice of the user. Moreover, the recognition section 120 is able to recognize a contact by the user or the like, a surrounding temperature, a presence of an animal, an attitude of the autonomous mobile object 10, and the like.

In addition, the recognition section 120 has a function of estimating and understanding a surrounding environment or a situation in which the autonomous mobile object 10 is placed on the basis of the recognized information. In this case, the recognition section 120 may perform a comprehensive situation estimation using an environmental knowledge stored in advance.

### [Learning Section 130]

The learning section 130 has a function of learning an environment (situation) and an action, and an effect of the action on the environment. The learning section 130 achieves the learning described above using a machine-learning algorithm such as, for example, Deep Learning. The learning algorithm employed by the learning section 130 is not limited to the above examples, and the learning algorithm may be appropriately designed.

### [Action Planning Section 140]

The action planning section 140 has a function of planning an action to be performed by the autonomous mobile object 10 on the basis of the situation estimated by the recognition section 120 and the knowledge learned by the learning section 130. Details of the function of the action planning section 140 according to an embodiment of the present disclosure will be described later.

### [Motion Controller 150]

The motion controller 150 has a function of controlling motions of the driver 160 and the output section 170 on the basis of the action plan planned by the action planning section 140. The motion controller 150 performs, on the basis of the action plan, for example, rotation control of the actuator 570, display control of the display 510, audio output control by a speaker, and the like. Details of the function of the motion controller 150 according to an embodiment of the present disclosure will be described later.

### [Driver 160]

The driver 160 has a function of bending and stretching the plurality of joint parts of the autonomous mobile object 10 on the basis of the control performed by the motion controller 150. The driver 160 includes the actuator 570 described with reference to FIG. 2, and the actuator 570 included in each joint part is driven on the basis of the control performed by the motion controller 150.

### [Output Section 170]

The output section 170 has a function of outputting visual information and sound information on the basis of the control performed by the motion controller 150. For this purpose, the output section 170 includes the display 510 and a speaker.

### [Server Communication Section 180]

The server communication section 180 has a function of communicating with the information processing server 20 and another autonomous mobile object 10. For example, the server communication section 180 transmits, to the information processing server 20, information related to the situation recognized by the recognition section 120 and the like. Further, for example, the server communication section 180 receives a recommended action or control sequence data related to the recommended action from the information processing server 20.

The functional configuration example of the autonomous mobile object 10 according to an embodiment of the present disclosure has been described above. It is to be noted that the configuration described above with reference to FIG. 8 is merely an example, and the functional configuration of the autonomous mobile object 10 according to an embodiment of the present disclosure is not limited thereto. The functional configuration of the autonomous mobile object 10 according to an embodiment of the present disclosure may be flexibly modified according to specifications and operations.

### [1.5. Functional Configuration Example of Information Processing Server 20]

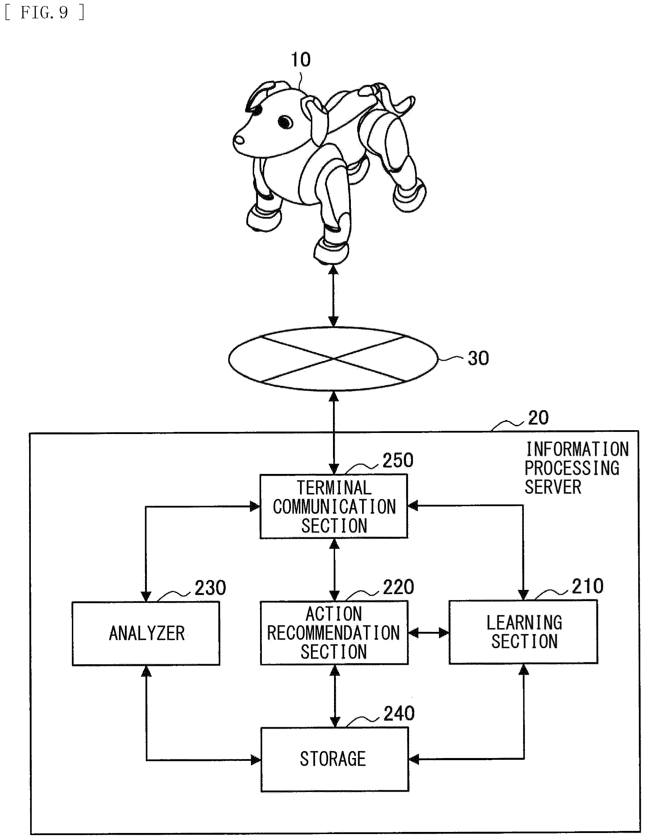

Next, a functional configuration example of the information processing server 20 according to an embodiment of the present disclosure will be described. FIG. 9 is a diagram illustrating the functional configuration example of the information processing server 20 according to an embodiment of the present disclosure. Referring to FIG. 9, the information processing server 20 according to an embodiment of the present disclosure includes a learning section 210, an action recommendation section 220, an analyzer 230, a storage 240, and a terminal communication section 250.

### [Learning Section 210]

The learning section 130 has a function of learning an environment (situation) and an action, and an effect of the action on the environment. In this case, the learning section 210 has a feature in that the learning section 210 performs learning on the basis of action histories collected from the plurality of autonomous mobile objects 10. That is, it is possible to regard the learning section 210 as collective intelligence common to the plurality of autonomous mobile objects 10.

### [Action Recommendation Section 220]

The action recommendation section 220 has a function of deciding a recommended action to be recommended to the autonomous mobile object 10 on the basis of the information related to the situation estimation received from the autonomous mobile object 10 and a knowledge as the collective intelligence possessed by the learning section 210. Further, the action recommendation section 220 has a feature in that the action recommendation section 220 transmits, together with recommended action, control sequence data for causing the autonomous mobile object 10 to achieve the recommended action to the autonomous mobile object via the terminal communication section 250.

Here, the control sequence data is information including control signals related to time-series changes in the rotational position of the joint part of the autonomous mobile object 10, an eyeball expression, and a sound output. In other words, the control sequence data is also said to be setup data that allows the autonomous mobile object 10 to achieve any motion (action).

The function of the action recommendation section 220 according to an embodiment of the present disclosure described above makes it possible to add any time a new action that the autonomous mobile object 10 is able to execute, and to continuously attract the user's interest in the autonomous mobile object 10.

### [Analyzer 230]

The analyzer 230 has a function of performing various analyses on the basis of the information received from the autonomous mobile object 10. The analyzer 230 is able to analyze a state of the actuator 570 or the like on the basis of, for example, an action history and an operating situation received from the autonomous mobile object 10. Further, the analyzer 230 is able to analyze the user's interest (degree of addiction) in the autonomous mobile object 10 on the basis of information of the user's contact, reaction, or the like received from the autonomous mobile object 10.

### [Storage 240]

The storage 240 has a function of accumulating information used by each configuration of the information processing server 20. The storage 240 stores the control sequence data received from the autonomous mobile object 10 in association with the situation or the user's reaction, for example. The storage 240 stores information to be used by the analyzer 230 for the analysis and a result of the analysis.

### [Terminal Communication Section 250]

The terminal communication section 250 has a function of communicating with the plurality of autonomous mobile objects 10 via the network 30. The terminal communication section 250 receives information related to the situation estimation from the autonomous mobile object 10, for example. In addition, the terminal communication section 250 transmits, to the autonomous mobile object 10, information related to the recommended action decided by the action recommendation section 220 and the control sequence data, for example.

The functional configuration example of the information processing server 20 according to an embodiment of the present disclosure has been described above. It is to be noted that the configuration described above with reference to FIG. 9 is merely an example, and the functional configuration of the information processing server 20 according to an embodiment of the present disclosure is not limited thereto. The information processing server 20 may include a function for providing various user interfaces to be described later to the user. Further, it is also possible to achieve various functions of the information processing server 20 by distributing the functions to a plurality of devices. The functional configuration of the information processing server 20 according to an embodiment of the present disclosure may be flexibly modified according to specifications and operations.

### [2. Motions]

The configurations of the autonomous mobile object 10 and the like according to the present disclosure have been described above. The motion controller 150 of the autonomous mobile object 10 according to the present disclosure described above causes the housing to perform, when a calculation section such as the recognition section 120 or the action planning section 140 is executing a calculation process, a motion corresponding to the type of the calculation process that the calculation section is executing. Such a configuration allows the user to know the type of the calculation process being executed in the autonomous mobile object 10. In addition, the calculation process that the calculation section is executing is associated with a motion that represents an activity of an animal corresponding to or similar to the calculation process. Therefore, the user is able to intuitively understand the calculation process that the autonomous mobile object 10 is executing, and it is possible to further enhance an animal-like character of the autonomous mobile object 10. Hereinafter, some specific examples of motions corresponding to types of calculation processes will be described in detail.

### [2.1. First Motion Example]

### [Overview of First Motion Example]

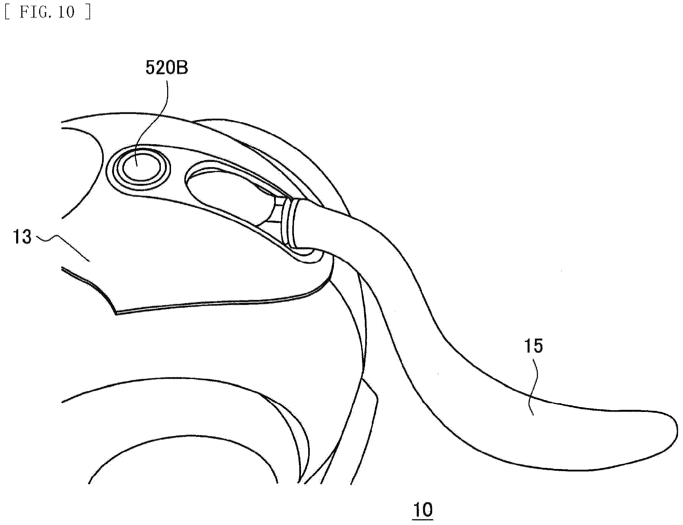

As described above, the autonomous mobile object 10 includes the camera 520B. As illustrated in FIG. 10, the camera 520B is provided at side on a dorsal surface of the body part 13 at side of the tail part 15. The camera 520B provided at such a position is able to image a wider range on the upper hemisphere side than 520A provided on the tip of the nose of head part 12.

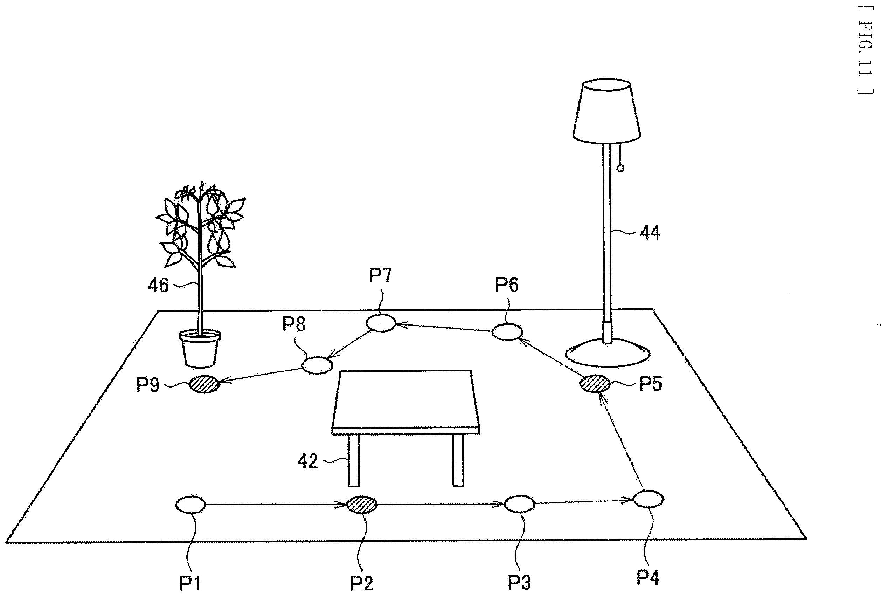

Accordingly, the calculation section such as the recognition section 120 or the action planning section 140 performs a SLAM process using a captured image acquired by the camera 520B. The SLAM process is a process that simultaneously performs map information creation and self-position estimation, and is executed over a period having a duration. The autonomous mobile object 10 according to embodiments of the present disclosure transitions to a SLAM mode on the basis of an instructions from the user or on the basis of a fact that there is no other process to be performed. In the SLAM mode, the autonomous mobile object 10 repeats moving and stopping, and executes the SLAM process while the movement is stopped. Hereinafter, referring to FIG. 11, the SLAM mode will be specifically described.

FIG. 11 is an explanatory diagram illustrating a specific example of the SLAM mode. In the example illustrated in FIG. 11, the autonomous mobile object 10 executes the SLAM process at a position P1, and moves to a position P2 when the SLAM process at the position P1 is terminated. The autonomous mobile object 10 then executes the SLAM process at the position P2, and moves to a position P3 when the SLAM process at the position P2 is terminated. The autonomous mobile object 10 repeatedly executes such moving, stopping, and SLAM process, moves from the position P1 to a position P9, and retrieves a result of the SLAM process at each of the positions P1 to P9.

Incidentally, marking is known as an action in which an animal shows its territory. It is possible to express the acquisition of surrounding map information by the SLAM process at a place where the autonomous mobile object 10 has arrived as that the autonomous mobile object 10 has gained the place; therefore, the SLAM process may be regarded as a process corresponding to the marking.

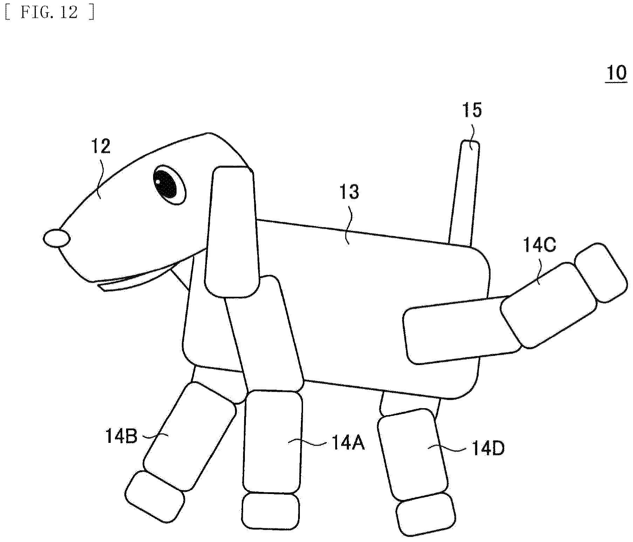

Thus, the autonomous mobile object 10 according to an embodiment of the present disclosure performs a marking motion as a motion corresponding to the SLAM process when the SLAM process is performed. The motion controller 150 drives the driver 160 to cause the housing, such as the body part 13 and the leg part 14, performs the marking motion. FIG. 12 is an explanatory diagram illustrating the marking motion of the autonomous mobile object 10. As illustrated in FIG. 12, the marking motion is a motion that lifts the hind leg part 14C or the hind leg part 14D.

There is a case where the autonomous mobile object 10 does not respond to another command received from the user while the autonomous mobile object 10 is performing the SLAM process. Further, in a case where the SLAM process is unsuccessful, the autonomous mobile object 10 may try the movement again. In a case where the user does not understand why the above events are occurring, the user may be uncomfortable. However, according to embodiments of the present disclosure, the marking motion indicates to the user that these events are attributed to the SLAM process, and it is possible to fill the time until the response to another command received from the user is performed; therefore, it is possible to reduce the discomfort given to the user by the above-described events.

Further, animals also tend to mark an object having a height are greater than or equal to a certain height, such as a wall and a utility pole. For this reason, the motion controller 150 of the autonomous mobile object 10 may cause the housing to perform the marking motion in a case where an object satisfying a predetermined condition is present, for example, an object having a height greater than or equal to a predetermined height, at a stop position of the autonomous mobile object. For example, as colored in FIG. 11, the motion controller 150 may cause the housing to perform the marking motion at the position P2 where a leg of a table 42 is present, at the position P5 where a light stand 44 is present, and at the position P9 where a plant 46 is present. Such a configuration makes it possible to further enhance the animal-like character of the autonomous mobile object 10.

### [Digest of First Motion Example]

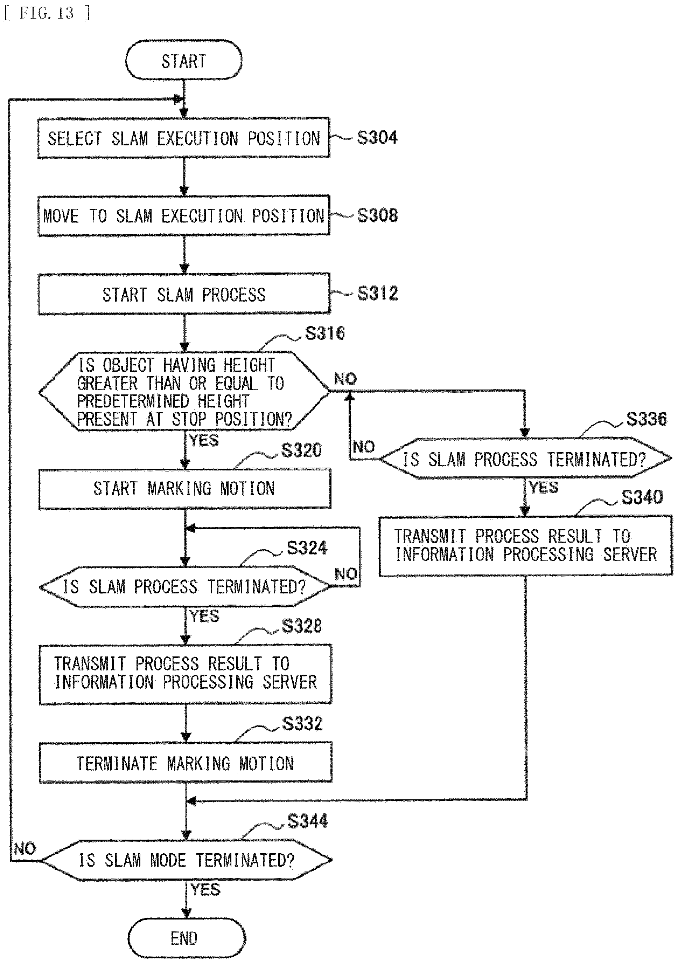

Next, referring to FIG. 13, a flow of the first motion example will be digested. FIG. 13 is a flowchart illustrating the flow of the first motion example. When the autonomous mobile object 10 enters the SLAM mode, the action planning section 140 of the autonomous mobile object 10 selects a SLAM execution position for performing the SLAM process (S304). Thereafter, the motion controller 150 drives the driver 160 to cause the autonomous mobile object 10 to move to the SLAM execution position (S308). After the autonomous mobile object 10 stops moving, the autonomous mobile object 10 starts the SLAM process (S312). That is, the camera 520B starts imaging and the recognition section 120 starts the map information creation and the self-position estimation.

Then, the recognition section 120 determines whether or not an object having a height greater than or equal to a predetermined height present at the stop position of the autonomous mobile object 10 (for example, within a predetermined distance from the autonomous mobile object 10) (S316). In a case where an object having a height greater than or equal to the predetermined height is present (S316/Yes), the motion controller 150 causes the housing to start the marking motion (S320).

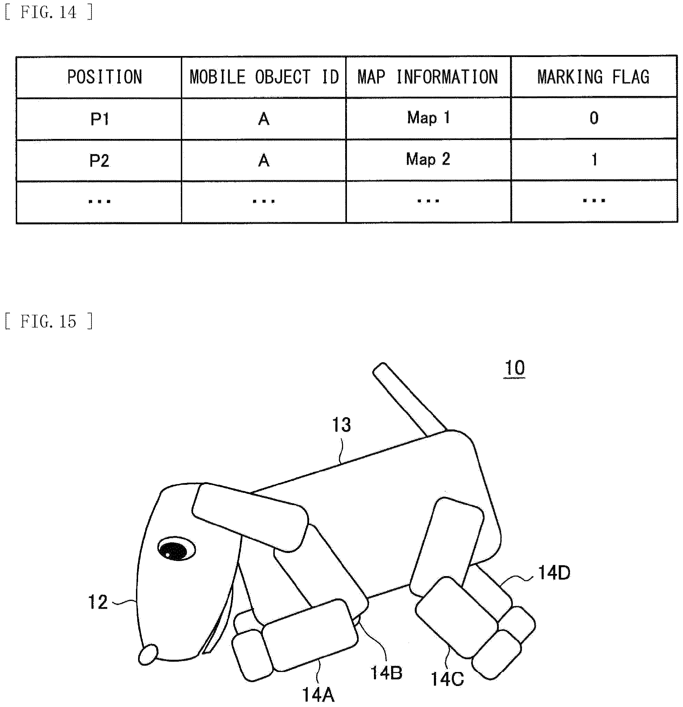

Thereafter, when the SLAM process is terminated (S324/Yes), the server communication section 180 transmits a process result of the SLAM process and a marking flag to the information processing server 20 (S328), and the motion controller 150 causes the housing to terminate the marking motion (S332). It is to be noted that the process result of the SLAM process include a mobile object ID, which is identification information of the autonomous mobile object 10, an estimated position, and created map information. The marking flag is a flag indicating whether or not the marking motion has been performed at the stop position. As illustrated in FIG. 14, the information processing server 20 accumulates the process results of the SLAM process and the marking flags received from the autonomous mobile object 10 in the storage 240. In the example illustrated in FIG. 14, a marking flag "0" (marking motion is absent) is associated with the position P1, and a marking flag "1" (marking motion is present) is associated with the position P2.

In contrast, in a case where no object having a height greater than or equal to the predetermined height is present at the stop position of the autonomous mobile object 10 (S316/No), the autonomous mobile object 10 does not perform the marking motion. When the SLAM process is terminated (S336/Yes), the server communication section 180 transmits the process result of the SLAM process to the information processing server 20 (S340).

After S332 or after S340, the process from S304 is repeated while the SLAM mode continues (S344/No).

### [Supplement]

The marking motion changes an attitude of the body part 13 and also changes a visual field of the camera 520B. Further, the way in which the visual field of the camera 520B changes also differs depending on a mode of the marking motion, e.g., which of the hind leg parts 14C and 14D is lifted. Accordingly, the motion controller 150 may change, in the marking motion, the motion controller 150 may change the attitude of the body part 13 to cause the visual field of the camera 520B to face an area where there is not enough map information. Such a configuration makes it possible to efficiently collect map information that has been lacked. Further, the motion controller 150 may also change the attitude of the marking motion at a single stop position. The recognition section 120 performs the SLAM process in each attitude, which makes it possible to obtain more pieces of map information at the single stop position.

Also, as described above, the marking motion of the autonomous mobile object 10 is performed to indicate to the user that the SLAM process is being executed. Accordingly, in a case where there is no user around the autonomous mobile object 10, it rarely has meaning for the autonomous mobile object 10 to perform the marking motion. Therefore, the motion controller 150 may cause the housing to perform the marking motion if the presence of the user is detected around the autonomous mobile object 10, and does not necessarily cause the housing to perform the marking motion if the presence of the user is not detected. It is to be noted that the detection of the presence of the user may be performed by the recognition section 120 having a function as a user detector. In addition, the motion controller 150 may cause the housing to perform no marking motion in a room, but may also cause the housing to perform the marking motion in the room in a case where a discipline level of the autonomous mobile object 10 or an intimacy level with the user falls below a predetermined reference level.

In the above, the motion controller 150 causes the housing to perform the marking motion during the SLAM process, however, the motion controller 150 may also cause the housing to perform the marking motion during other processes. For example, the motion controller 150 may cause the housing to perform the marking motion while one of the self-position estimation or the map information creation is being performed. Also in this case, it is possible to express to the user, in an animal-like motion, the calculation process taking place inside the autonomous mobile object 10.

The process results of the SLAM process and the marking flags accumulated in the information processing server 20 described with reference to FIG. 14 may be shared by the plurality of autonomous mobile object 10. For example, the process result of SLAM process and the marking flag obtained by the autonomous mobile object 10a may be transmitted from the information processing server 20 to the autonomous mobile object 10b. An autonomous mobile object 10 that has received a process result of the SLAM process and a marking flag obtained by another autonomous mobile object 10 may perform, when creating map information, receiving GPS, or performing the SLAM process at a position where the other autonomous mobile object 10 has performed the marking motion, a motion of sniffing as illustrated in FIG. 15. Such a configuration allows the user to know that internal processes such as the map information creation, the GPS reception, or the SLAM process are being performed.

It is to be noted that the process result of the SLAM process shared between the plurality of autonomous mobile objects 10 may include another piece of information in place of the mobile object ID, as information corresponding to the autonomous mobile object 10. The other piece of information may be a smell ID that indicates a smell of the user who owns the autonomous mobile object 10. Then, in a case where the autonomous mobile object 10 performs the motion of sniffing at a position where another autonomous mobile object 10 has performed the motion of marking, the autonomous mobile object 10 may store the smell ID of the other autonomous mobile object 10. In a case where autonomous mobile objects 10 present within a predetermined distance are able to directly exchange the smell IDs, the autonomous mobile object 10 is able to determine if another autonomous mobile object 10 present within the predetermined distance has the stored smell ID. In a case where the other autonomous mobile object 10 present within the predetermined distance has the stored smell ID, the autonomous mobile object 10 may indicate a behavior, such as barking or wagging the tail part 15, that differs from a behavior for another autonomous mobile object 10 that does not have the stored smell ID.

Also, the marking motion described above may differ depending on an attribute of the autonomous mobile object 10. Examples of the attribute include sex and age that have been set. For example, depending on the age, an angle or a height at which the hind leg part 14C or the hind leg part 14D is lifted may be adjusted. Specifically, in a marking motion of an autonomous mobile object 10 to which a lower age is set, the hind leg part 14C or the hind leg part 14D may be raised higher at a greater angle than in a marking motion of an autonomous mobile object 10 to which a higher age is set.

In addition, the type of the marking motion may be different depending on the sex. For example, a marking motion of an autonomous mobile object 10 to which the male is set may be a motion of lifting the hind leg part 14C or the hind leg part 14D as illustrated in FIG. 12, and a marking motion of an autonomous mobile object 10 to which the female is set may be a motion of kicking the floor or the ground with the hind leg part 14C or the hind leg part 14D.

### [2.2. Second Motion Example]

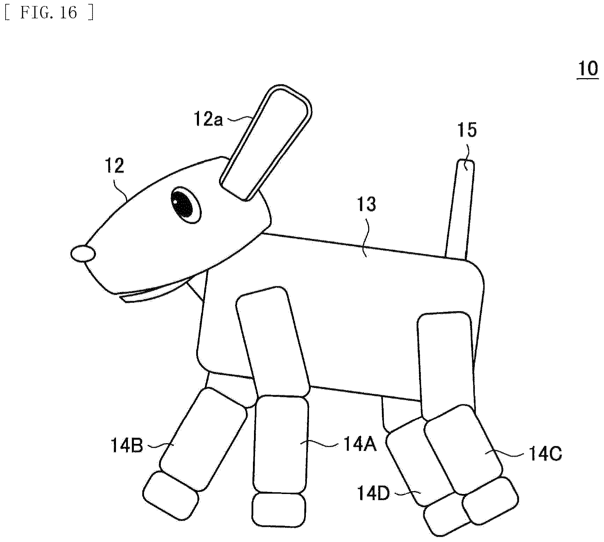

Next, a second motion example of the autonomous mobile object 10 will be described. As described with reference to FIG. 1, the autonomous mobile object 10 includes the microphone 515, and the recognition section 120 performs a voice recognition process of recognizing a voice inputted to the microphone 515. Animals, when listening carefully to surrounding sounds, attempt to capture the surrounding sounds more efficiently by spreading their ears or raising their ears. For this reason, in a case where the recognition section 120 is performing the voice recognition process, as illustrated in FIG. 16, the motion controller 150 may control the driver 160 to raise an ear of the head part 12. Such a configuration allows the user to intuitively understand on the basis of the state of the ear that the autonomous mobile object 10 is executing the voice recognition process.

### [3. Conclusion]

As described above, the motion controller 150 of the autonomous mobile object 10 according to embodiments of the present disclosure causes the housing to perform, when the calculation section such as the recognition section 120 or the action planning section 140 is executing the a calculation process, a motion corresponding to the type of the calculation process that the calculation section is executing. Such a configuration allows an activity that is being performed internally to be indicated to the user, similarly to actual animals, without using text displays or the like. Further, the calculation process that the calculation section is executing is associated with a motion that represents an activity of an animal corresponding to or similar to the calculation process. Therefore, the user is able to intuitively understand the calculation process that the autonomous mobile object 10 is executing, and it is possible to further enhance an animal-like character of the autonomous mobile object 10.

A preferred embodiment(s) of the present disclosure has/have been described above in detail with reference to the accompanying drawings, but the technical scope of the present disclosure is not limited to such an embodiment(s). It is apparent that a person having ordinary skill in the art of the present disclosure can arrive at various alterations and modifications within the scope of the technical idea described in the appended claims, and it is understood that such alterations and modifications naturally fall within the technical scope of the present disclosure.

Further, the steps included in the process of the autonomous mobile of the present specification are not necessarily processed in a time-series order in accordance with the flowcharts. For example, the steps included in the process of the autonomous mobile object 10 may be processed in different order from the flowcharts, or may be processed in a parallel manner.

Further, it is also possible to create a computer program for causing hardware such as the CPU, the ROM, and the RAM, which are built in the autonomous mobile object 10, to exhibit substantially the same functions as those of respective structures of the autonomous mobile object 10 described above. Further, there is also provided a storage medium having the computer program stored therein.

Furthermore, the effects described herein are merely illustrative and exemplary, and not limiting. That is, the technique according to the present disclosure can exert other effects that are apparent to those skilled in the art from the description herein, in addition to the above-described effects or in place of the above-described effects.

### Reference Signs List

- 10: autonomous mobile object
- 12: head part
- 13: body part
- 14: leg part
- 15: tail part
- 20: information processing server
- 30: network
- 110: input section
- 120: recognition section
- 130: learning section
- 140: action planning section
- 150: motion controller
- 160: driver
- 170: output section
- 180: server communication section
- 210: learning section
- 220: action recommendation section
- 230: analyzer
- 240: storage
- 250: terminal communication section
- 510: display
- 515: microphone
- 520: camera
- 525: ToF sensor
- 530: human detection sensor
- 535: PSD sensor
- 540: touch sensor
- 545: light intensity sensor
- 550: sole button
- 555: inertial sensor
- 570: actuator

## Claims

1. An animal-shaped autonomous mobile object (10) comprising:
a housing having a shape of an animal;
a calculation section; and
a motion controller (150) that causes the housing to perform a motion corresponding to a type of a calculation process that the calculation section is executing, **characterised in that**, in a case where a calculation process that the calculation section is executing is a process of creating map information or a process of estimating a position of the animal-shaped autonomous mobile object (10), the motion controller (150) causes the housing to perform a marking motion being a motion that lifts a hind leg part (14C, 14D) of the housing.

2. The animal-shaped autonomous mobile object (10) according to claim 1, wherein
the animal-shaped autonomous mobile object (10) has an imaging section (520, 525), and
the calculation section generates, as the map information, three-dimensional map information by analyzing a captured image acquired by the imaging section (520, 525).

3. The animal-shaped autonomous mobile object (10) according to claim 2, wherein
the housing includes a body part (13), a head part (12), a tail part (15), and a plurality of leg parts (14),
the plurality of leg parts (14) include two foreleg parts (14A, 14B) provided at side of the head part (12) and the two hind leg parts (14C, 14D) provided at side of the tail part (15), and
the imaging section (520) is provided on a dorsal surface of the body part (13) at side of the tail part (15).

4. The animal-shaped autonomous mobile object (10) according to claim 1, wherein
the motion controller (150) causes the animal-shaped autonomous mobile object (10) to repeat moving and stopping,
the calculation section performs the process of creating map information or the process of estimating a position while movement of the animal-shaped autonomous mobile object (10) is stopped, and,
in a case where an object (42, 44 , 46) satisfying a predetermined condition is present at a stop position of the animal-shaped autonomous mobile object (10), the motion controller (150) causes the housing to perform the marking motion.

5. The animal-shaped autonomous mobile object (10) according to claim 4, wherein the object satisfying the predetermined condition is an object (42, 44, 46) having a height greater than or equal to a predetermined height.

6. The animal-shaped autonomous mobile object (10) according to claim 1, further comprising
a user detector (530) that detects presence of a user, wherein,
in a case where the user is being detected by the user detector (530), the motion controller causes the housing to perform the marking motion.

7. The animal-shaped autonomous mobile object (10) according to claim 4, further comprising
a communication section (180) that transmits, to an information processing server (20), a result of a calculation process executed at the stop position and information indicating whether or not the marking motion has been performed at the stop position.

8. The animal-shaped autonomous mobile object (10) according to claim 7, wherein
the communication section (180) receives, from the information processing server (20), a result of the calculation process at a position and information indicating whether or not the marking motion has been performed at the position, and,
in a case where the animal-shaped autonomous mobile object (10) is present at the position and where the result of the calculation process at the position and the information indicating whether or not the marking motion has been performed at the position are received by the communication section, the motion controller (150) causes the housing to perform a motion of sniffing.

9. The animal-shaped autonomous mobile object (10) according to claim 1, wherein
the housing includes a head part (12) having an ear, and,
in a case where the calculation process that the calculation section is executing is a voice recognition process of recognizing a voice of a user, the motion controller causes the housing to open the ear.

10. The animal-shaped autonomous mobile object (10) according to claim 1, wherein the calculation process is a process executed over a period having a duration.

11. A method of causing an animal-shaped autonomous mobile object (10) to perform a motion, the method comprising:
executing, by a processor, a calculation process; and
causing a housing having a shape of an animal to perform a motion corresponding to a type of the calculation process that the processor is executing,
wherein, in a case where a calculation process that the calculation section is executing is a process of creating map information or a process of estimating a position of the animal-shaped autonomous mobile object (10), a motion controller (150) causes the housing to perform a marking motion being a motion that lifts a hind leg part (14C, 14D) of the housing.

12. A computer program comprising instructions which, when the program is executed by a computer, cause the computer to function as a calculation section, and
as a motion controller (150) configured to output commands that cause a housing having a shape of an animal to perform a motion corresponding to a type of a calculation process that the calculation section is executing,
wherein, in a case where a calculation process that the calculation section is executing is a process of creating map information or a process of estimating a position of the animal-shaped autonomous mobile object (10), the motion controller (150) causes the housing to perform a marking motion being a motion that lifts a hind leg part (14C, 14D) of the housing.

## Patentansprüche

1. Tierförmiges autonomes mobiles Objekt (10), umfassend:
ein Gehäuse in der Form eines Tieres;
einen Berechnungsabschnitt; und
eine Bewegungssteuervorrichtung (150), die das Gehäuse veranlasst, eine Bewegung durchzuführen, die einer Art eines Berechnungsprozesses entspricht, den der Berechnungsabschnitt gerade ausführt,
**dadurch gekennzeichnet, dass**
in einem Fall, in dem ein Berechnungsprozess, den der Berechnungsabschnitt gerade ausführt, ein Prozess zum Erzeugen von Karteninformationen oder ein Prozess zum Schätzen einer Position des tierförmigen autonomen mobilen Objekts (10) ist, die Bewegungssteuervorrichtung (150) das Gehäuse veranlasst, eine Markierbewegung durchzuführen, die eine Bewegung ist, die einen Hinterbeinteil (14C, 14D) des Gehäuses anhebt.

2. Tierförmiges autonomes mobiles Objekt (10) gemäß Anspruch 1, wobei
das tierförmige autonome mobile Objekt (10) einen Bildaufnahmeabschnitt (520, 525) aufweist, und
der Berechnungsabschnitt als Karteninformationen dreidimensionale Karteninformationen durch Analysieren eines aufgenommenen Bildes erzeugt, das durch den Bildaufnahmeabschnitt (520, 525) erfasst wurde.

3. Tierförmiges autonomes mobiles Objekt (10) gemäß Anspruch 2, wobei
das Gehäuse einen Rumpfteil (13), einen Kopfteil (12), einen Schwanzteil (15) und eine Vielzahl von Beinteilen (14) aufweist,
die Vielzahl von Beinteilen (14) zwei Vorderbeinteile (14A, 14B), die an der Seite des Kopfteils (12) vorgesehen sind, und die zwei Hinterbeinteile (14C, 14D), die an der Seite des Schwanzteils (15) vorgesehen sind, beinhalten und
der Bildaufnahmeabschnitt (520) auf einer dorsalen Fläche des Rumpfteils (13) an der Seite des Schwanzteils (15) vorgesehen ist.

4. Tierförmiges autonomes mobiles Objekt (10) gemäß Anspruch 1, wobei
die Bewegungssteuervorrichtung (150) das tierförmige autonome mobile Objekt (10) veranlasst, sich wiederholt zu bewegen und anzuhalten,
der Berechnungsabschnitt den Prozess des Erzeugens von Karteninformationen oder den Prozess des Schätzens einer Position durchführt, während die Bewegung des tierförmigen autonomen mobilen Objekts (10) angehalten ist, und
in einem Fall, in dem ein Objekt (42, 44, 46), das eine vorbestimmte Bedingung erfüllt, an einer Halteposition des tierförmigen autonomen mobilen Objekts (10) vorhanden ist, die Bewegungssteuervorrichtung (150) das Gehäuse veranlasst, die Markierbewegung durchzuführen.

5. Tierförmiges autonomes mobiles Objekt (10) gemäß Anspruch 4, wobei das Objekt, das die vorbestimmte Bedingung erfüllt, ein Objekt (42, 44, 46) ist, das eine Höhe aufweist, die größer oder gleich einer vorbestimmten Höhe ist.

6. Tierförmiges autonomes mobiles Objekt (10) gemäß Anspruch 1, ferner umfassend
einen Benutzerdetektor (530), der die Anwesenheit eines Benutzers erkennt, wobei
in einem Fall, in dem der Benutzer durch den Benutzerdetektor (530) erkannt wird, die Bewegungssteuervorrichtung das Gehäuse veranlasst, die Markierbewegung durchzuführen.

7. Tierförmiges autonomes mobiles Objekt (10) gemäß Anspruch 4, ferner umfassend
einen Kommunikationsabschnitt (180), der an einen Informationsverarbeitungsserver (20) ein Ergebnis eines Berechnungsprozesses, der an der Halteposition ausgeführt wurde, und Informationen überträgt, die angeben, ob die Markierbewegung an der Halteposition durchgeführt wurde oder nicht.

8. Tierförmiges autonomes mobiles Objekt (10) gemäß Anspruch 7, wobei
der Kommunikationsabschnitt (180) aus dem Informationsverarbeitungsserver (20) ein Ergebnis des Berechnungsprozesses an einer Position und Informationen empfängt, die angeben, ob die Markierbewegung an der Position durchgeführt wurde oder nicht, und
in einem Fall, in dem das tierförmige autonome mobile Objekt (10) an der Position vorhanden ist und in dem das Ergebnis des Berechnungsprozesses an der Position und die Informationen, die angeben, ob die Markierbewegung an der Position durchgeführt wurde oder nicht, durch den Kommunikationsabschnitt empfangen werden, die Bewegungssteuervorrichtung (150) das Gehäuse veranlasst, eine Schnüffelbewegung durchzuführen.

9. Tierförmiges autonomes mobiles Objekt (10) gemäß Anspruch 1, wobei
das Gehäuse einen Kopfteil (12) mit einem Ohr aufweist, und
in einem Fall, in dem der Berechnungsprozess, den der Berechnungsabschnitt gerade ausführt, ein Spracherkennungsprozess zum Erkennen einer Stimme eines Benutzers ist, die Bewegungssteuervorrichtung das Gehäuse veranlasst, das Ohr zu öffnen.

10. Tierförmiges autonomes mobiles Objekt (10) gemäß Anspruch 1, wobei der Berechnungsprozess ein Prozess ist, der über einen Zeitraum mit einer Dauer ausgeführt wird.

11. Verfahren zum Veranlassen eines tierförmigen autonomen mobilen Objekts (10), eine Bewegung durchzuführen, wobei das Verfahren umfasst:
Ausführen eines Berechnungsprozesses durch einen Prozessor; und
Veranlassen eines Gehäuses in der Form eines Tieres, eine Bewegung durchzuführen, die einer Art des durch den Prozessor gerade ausgeführten Berechnungsprozesses entspricht,
wobei in einem Fall, in dem ein Berechnungsprozess, den der Berechnungsabschnitt gerade ausführt, ein Prozess zum Erzeugen von Karteninformationen oder ein Prozess zum Schätzen einer Position des tierförmigen autonomen mobilen Objekts (10) ist, eine Bewegungssteuervorrichtung (150) das Gehäuse veranlasst, eine Markierbewegung durchzuführen, die eine Bewegung ist, die einen Hinterbeinteil (14C, 14D) des Gehäuses anhebt.

12. Computerprogramm, umfassend Befehle, die beim Ausführen des Programms durch einen Computer den Computer veranlassen, als ein Berechnungsabschnitt und als eine Bewegungssteuervorrichtung (150) zu fungieren, die dazu ausgelegt ist, Befehle auszugeben, die ein Gehäuse in der Form eines Tieres veranlassen, eine Bewegung durchzuführen, die einer Art eines Berechnungsprozesses entspricht, den der Berechnungsabschnitt gerade ausführt,
wobei in einem Fall, in dem ein Berechnungsprozess, den der Berechnungsabschnitt gerade ausführt, ein Prozess zum Erzeugen von Karteninformationen oder ein Prozess zum Schätzen einer Position des tierförmigen autonomen mobilen Objekts (10) ist, die Bewegungssteuervorrichtung (150) das Gehäuse veranlasst, eine Markierbewegung durchzuführen, die eine Bewegung ist, die einen Hinterbeinteil (14C, 14D) des Gehäuses anhebt.

## Revendications

1. Objet mobile autonome en forme d'animal (10) comprenant :
un boîtier ayant la forme d'un animal ;
une section de calcul ; et
un dispositif de commande de mouvement (150) qui amène le boîtier à exécuter un mouvement correspondant à un type de processus de calcul que la section de calcul exécute,
**caractérisé en ce que**
dans un cas où un processus de calcul que la section de calcul exécute est un processus de création d'informations de carte ou un processus d'estimation d'une position de l'objet mobile autonome en forme d'animal (10), le dispositif de commande de mouvement (150) amène le boîtier à exécuter un mouvement de marquage qui est un mouvement de levage d'une patte postérieure (14C, 14D) du boîtier.

2. Objet mobile autonome en forme d'animal (10) selon la revendication 1, dans lequel
l'objet mobile autonome en forme d'animal (10) comporte une section d'imagerie (520, 525), et
la section de calcul génère, en tant qu'informations de carte, des informations de carte en trois dimensions par l'analyse d'une image capturée acquise par la section d'imagerie (520, 525).

3. Objet mobile autonome en forme d'animal (10) selon la revendication 2, dans lequel
le boîtier comprend une partie corps (13), une partie tête (12), une partie queue (15), et une pluralité de parties pattes (14),
la pluralité de parties pattes (14) comprend deux pattes antérieures (14A, 14B) placées sur un côté de la partie tête (12) et deux pattes postérieures (14C, 14D) placées sur un côté de la partie queue (15), et
la section d'imagerie (520) est placée sur une surface dorsale de la partie corps (13) sur un côté de la partie queue (15).

4. Objet mobile autonome en forme d'animal (10) selon la revendication 1, dans lequel
le dispositif de commande de mouvement (150) amène l'objet mobile autonome en forme d'animal (10) à répéter un mouvement et à s'arrêter,
la section de calcul exécute le processus de création d'informations de carte ou le processus d'estimation d'une position pendant que le mouvement de l'objet mobile autonome en forme d'animal (10) est arrêté, et
dans un cas où un objet (42, 44, 46) satisfaisant à une condition prédéterminée est présent à une position d'arrêt de l'objet mobile autonome en forme d'animal (10), le dispositif de commande de mouvement (150) amène le boîtier à exécuter le mouvement de marquage.

5. Objet mobile autonome en forme d'animal (10) selon la revendication 4, dans lequel l'objet satisfaisant à la condition prédéterminée est un objet (42, 44, 46) ayant une hauteur supérieure ou égale à une hauteur prédéterminée.

6. Objet mobile autonome en forme d'animal (10) selon la revendication 1, comprenant en outre
un détecteur d'utilisateur (530) qui détecte la présence d'un utilisateur, dans lequel
dans un cas où l'utilisateur est détecté par le détecteur d'utilisateur (530), le dispositif de commande de mouvement amène le boîtier à exécuter le mouvement de marquage.

7. Objet mobile autonome en forme d'animal (10) selon la revendication 4, comprenant en outre
une section de communication (180) qui transmet, à un serveur de traitement d'informations (20), un résultat d'un processus de calcul exécuté à la position d'arrêt et des informations indiquant si oui ou non le mouvement de marquage a été exécuté à la position d'arrêt.

8. Objet mobile autonome en forme d'animal (10) selon la revendication 7, dans lequel
la section de communication (180) reçoit, depuis le serveur de traitement d'informations (20), un résultat du processus de calcul à une position et des informations indiquant si oui ou non le mouvement de marquage a été exécuté à la position, et
dans un cas où l'objet mobile autonome en forme d'animal (10) est présent à la position et où le résultat du processus de calcul à la position et les informations indiquant si oui ou non le mouvement de marquage a été exécuté à la position sont reçus par la section de communication, le dispositif de commande de mouvement (150) amène le boîtier à exécuter un mouvement de reniflage.

9. Objet mobile autonome en forme d'animal (10) selon la revendication 1, dans lequel
le boîtier comprend une partie tête (12) ayant une oreille, et
dans un cas où un processus de calcul que la section de calcul exécute est un processus de reconnaissance vocale consistant à reconnaître la voix d'un utilisateur, le dispositif de commande de mouvement amène le boîtier à ouvrir l'oreille.

10. Objet mobile autonome en forme d'animal (10) selon la revendication 1, dans lequel le processus de calcul est un processus exécuté sur une période ayant une durée.

11. Procédé destiné à amener un objet mobile autonome en forme d'animal (10) à exécuter un mouvement, le procédé comprenant :
l'exécution, par un processeur, d'un processus de calcul ; et
l'entraînement d'un boîtier ayant la forme d'un animal à exécuter un mouvement correspondant à un type du processus de calcul que le processeur exécute,
dans lequel, dans un cas où un processus de calcul que la section de calcul exécute est un processus de création d'informations de carte ou un processus d'estimation d'une position de l'objet mobile autonome en forme d'animal (10), un dispositif de commande de mouvement (150) amène le boîtier à exécuter un mouvement de marquage qui est un mouvement de levage d'une patte postérieure (14C, 14D) du boîtier.

12. Programme informatique comprenant des instructions qui, lorsque le programme est exécuté par un ordinateur, amène l'ordinateur à fonctionner comme une section de calcul, et comme un dispositif de commande (150) configuré pour délivrer des commandes qui amènent un boîtier ayant la forme d'un animal à exécuter un mouvement correspondant à un type du processus de calcul que la section de calcul exécute,
dans lequel, dans un cas où un processus de calcul que la section de calcul exécute est un processus de création d'informations de carte ou un processus d'estimation d'une position de l'objet mobile autonome en forme d'animal (10), le dispositif de commande de mouvement (150) amène le boîtier à exécuter un mouvement de marquage qui est un mouvement de levage d'une patte postérieure (14C, 14D) du boîtier.
